# EUROPEAN PATENT SPECIFICATION

(11) **EP 1 215 585 B1**
(45) Date of publication and mention of the grant of the patent: **19.05.2010**
(21) Application number: 01128821.4
(22) Date of filing: 04.12.2001
(51) Int. Cl.: G06F 13/38, H04L 12/46

(54) **Virtualization of i/o adapter resources**
Virtualisierung von E/A-Adapterressourcen
Virtualisation des ressources d'adaptateur d'entrées/sorties

(30) Priority: 15.12.2000 EP 00127579
(43) Date of publication of application: 19.06.2002
(73) Proprietor: International Business Machines Corporation, Armonk, NY 10504 (US)
(72) Inventor: Bayer, Gerd Konrad, 70565 Stuttgart (DE); Eckert, Wolfgang, 71155 Altdorf (DE); Helms, Markus, 71034 Böblingen (DE); Märgner, Jürgen, 71069 Sindelfingen (DE); Raisch, Christoph, 70839 Gerlingen (DE); Schlipf, Thomas, 71088 Holzgerlingen (DE); Theurich, Klaus, 75391 Gechingen (DE)
(74) Representative: Duscher, Reinhard

(56) References cited:
- EP-A- 0 772 131
- EP-A- 0 789 302
- EP-A- 1 006 449
- WO-A-99/03044
- US-A- 5 671 355
- ANONYMOUS: "PCI to Infiniband Bridge Target Channel Adapter; Requirements"[Online] 29 June 2000 (2000-06-29), XP002220701 Retrieved from the Internet: URL:http://www.sun.com/io_technologies/doc s/PCI_TO_IB_HANDOUT1.pdf>

## Description

### 1. BACKGROUND OF THE INVENTION

### 1.1 FIELD OF THE INVENTION

The subject invention relates to hardware-to-hardware data transmission in computer systems. In particular, it relates to method and system for operating I/O adapters attaching computing devices to an I/O periphery, to a network, or to other computing devices.

### 1.2 DESCRIPTION AND DISADVANTAGES OF PRIOR ART

The area of the invention concerns hardware of computer systems and network components. It deals more particularly with a method to improve the performance of I/O adapters and utilisation of adapter-local resources like memory.

As revealed by a first publication of the InfiniBand Architecture (IBA), the prior art of interconnect technologies have failed to keep pace with the current computer evolution and the increased burden imposed on data servers, application processing and enterprise computing created by the popular success of the Internet.

High end computing concepts such as clustering, fail-safe operations, and 24x7 hour availability demand greater capacity to move data between processing nodes as well as between a processor node and I/O devices. These trends require higher bandwidths and lower latencies, they are pushing more functionality down to the I/O adapters, and they are demanding greater protection, higher isolation, deterministic behavior, and a higher quality of service then it is currently available. InfiniBand helps to achieve the above mentioned aims.

The invention can be advantageously applied with this new InfiniBand technology and thus increases speed of technical evolution.

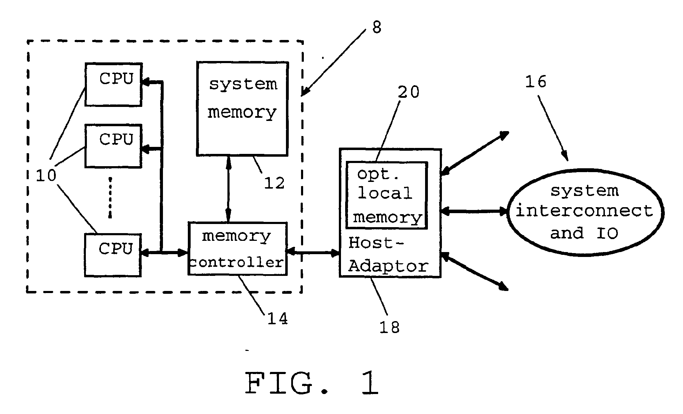

Although the invention has a quite general scope it will be discussed and set out with reference to a specific prior art hardware-to-hardware data transmission in computer systems. This is a communication between a CPU subsystem 8 and a host adapter 18, as depicted in fig.1 and explained next below.

Today's computer systems (hosts) have a "dense-packed" CPU-memory-subsystem 8 comprising a plurality of CPUs with caches 10, system memory 12, memory controller 14 , interconnect logic, etc. Input/output devices, further referred to herein as I/O devices 16 like storage devices, communication networking devices, inter-system connections, etc. are attached via a so-called I/O or host adapter 18. The host adapter 18 may be connected with some "distance" in terms of access time to the CPU-memory subsystem.

Applications running in the CPUs use specific communication protocols for their connections to said I/O devices 16 and other computer systems accessible via a network.

These protocols, as for example InfiniBand mentioned above, may define that the application can post work requests to the system memory and is enabled to signal the host adapter to process these work requests. This requires, however, that for signaling and control purposes some amount of information has to be transferred from the CPU-memory-subsystem 8 to the host adapter 18. There are protocols which define very complex tasks for the host adapter to execute in order to perform said processing of the work requests. As it is apparent to a person skilled in the art, a multiple queue processing system is used for processing various incoming requests, in-/outbound data traffic associated with work queues, and system control queues.

In prior art there have been two different types of methods to cope with this problem:
With the first type of methods, such as disclosed exemplarily in the International patent Application WO 99/03044, the I/O adapter 18 is equipped with local memory 20, e.g. implemented on-chip or as separate SRAM/DRAM on card or board. The required control information of the posted work requests is stored in this local memory. During processing, the host adapter 18 has fast access to the required information. This approach performs very well, but there are resource restrictions, for example the relatively small maximum number of postable work requests which prevents this prior art approach from scaling up to larger environments. This is primarily due to size limitations of the local memory 20. A simple up-scaling of the local memory is expensive as it costs too much (e.g. chip area costs or SRAM/DRAM module costs).
With the second type of methods, such as disclosed in EP 0789 302 Al, the I/O adapter is not equipped with local memory. Instead, it contains a small set of registers in logic to hold the required control information of one or more work requests. Processing work requests requires many accesses to system memory. This approach is optimized for cost but would not perform well although it does not imply the resource restrictions of method 1. This approach would be a significant obstacle for implementing a well performing, fabric-based switching technology such as InfiniBand.

### 1.3 OBJECTS OF THE INVENTION

It is thus an objective of the invention to overcome the performance / resource restriction problems as outlined above while concurrently being compatible with the switching technology in general.

### 2. SUMMARY AND ADVANTAGES OF THE INVENTION

These objects of the invention are achieved by the features stated in enclosed independent claims to which reference should now be made. Further advantageous arrangements and embodiments of the invention are set forth in the respective subclaims.

According to a primary aspect of the invention a method for improving the performance of a network coupling means is disclosed which attaches one or more computing means for example, the plurality of CPUs 10 depicted in fig. 1 via an interconnected memory means, for example the system memory 12 depicted in fig. 1, to an I/O periphery 16, to a network, or to other computing means. The method is then characterized by the steps of:
operating a memory means local to the network coupling means as a cache memory relative to a system memory means, called an interconnected memory means, associated with one or more computing means for storing transmission control information.

The term network and network coupling means is to be understood in a very general sense: The network can be for example a Wide Area Network (WAN), a Local Area Network (LAN), or even backplane bus within a PC where the bus participants are interpreted as network attached elements. The term network coupling means is thus any hardware device in such hardware structure which interconnects network components.

Said hardware structures include explicitly so-called fabric structures as well as a replacement technology of any kind of conventional bus technology. The expression "fabric" has the general meaning of 'configuration'. More particularly it is used herein as defined in the Fibre-Channel or the Infiniband Standards.

Thus, in terms of network topology, it can be considered as an 'agglomeration, i.e., a 'cloud'-like structure of point-to-point connections', in which the bandwidth availability is less restricted compared to conventional bus technology, for example. As a primary advantage the option is provided to offer a variable number of communication channels without the provision of a large local memory with a fixed size and performance in the network coupling means itself. Thus, the performance of said network coupling means can be easily scaled up according to dynamically changing traffic load without adding large amount of fast and expensive SRAM/DRAM area locally into said device. Thus, the traffic load flexibility is increased significantly.
The above inventional concept can be advantageously used with InfiniBand technology because a modern industry standard is defined therewith which allows to apply said fabric-based concept in the whole range of applications as it was sketched out above.

When the transmission control comprises the processing of address translation, e.g., logical to physical and vice versa- and protection information, e.g., tables then prior art remote processes can be advantageously performed.

When used for connecting a plurality of I/O devices associated with one or more computing means as described above, the entire I/O periphery can be controlled with less restrictions and better performance according to the invention.

When said transmission control information is bundled per queue or queue pair then the number of cache line transfers to said interconnected memory means for a queue work request is reduced which increases performance and saves bandwidth.

Said cache memory can be configured for special queues not to discard transmission control information after cast out, i.e., after copying said control information back to the main memory. Subsequent repeated cast-in operations can be avoided if the cache line has not been re-used for other control information. A reduced number of cast-in operations and reduced latency improve the processing of queue pairs.

When writing said transmission control information to the memory means only before signaling the completion of a InfiniBand verb, then bandwidth is saved as well.

The inventional method can even be used for providing interprocess communication (IPC) between a plurality of processes associated with one or more computing means, independent of the underlying hardware structure of the network.

Furthermore it can be advantageously combined with the InfiniBand Architecture specification which was recently published. Amongst the general understanding of a person skilled in the art the following terms are thus used with additional - but not restricted to - particular reference to the InfiniBand Architecture specification, as it was recently published:
'Adapters' in the sense of Host Channel Adapters (HCA) or Target Channel Adapters (TCA), 'network' including a fabric, or 'verbs' which provide an abstract definition of the functionality provided to a host by a Host Channel Interface (HCI).

The basic idea of the invention is, to use system memory as well as host adapter local memory for the transmission control information. The local memory is used like a cache, the system memory hold those work requests, which do not fit into the cache. This allows to provide the performance of implementing local memory only, but overcomes the resource restrictions of the local-memory-only approach.

The InfiniBand Architecture is designed around a point-to-point, switched I/O fabric, whereby end-node devices (which can range from very inexpensive I/O devices like single chip SCSI or Ethernet s to very complex host computers) are interconnected by cascaded switch devices.

The invention provides a general means for improving prior art hardware-to-hardware data transmission on a very large range of scales: the invention can thus be advantageously applied to improve data traffic in pure, dedicated network devices like switches and routers, and furthermore, it can be well applied within LAN/WAN-based interprocess communication. The invention's basic concept is open to integrate any prior art network technology and in particular it can be advantageously applied to techniques such as Ethernet or Fibre Channel.

Thus, according to the invention any hardware-based data transmission like a module-to-module interconnection, as it is typified by computer systems that support I/O module add-in slots or chassis-to-chassis interconnections as they are typified by interconnecting computers, external storage systems or even external LAN/WAN access devices, such as switches, hubs and routers in a data-center environment can be advantageously supported by the invention's concepts.

### 3. BRIEF DESCRIPTION OF THE DRAWINGS

The invention is illustrated by way of example and is not limited by the shape of the figures of the accompanying drawings in which:
- Fig. 1: is a schematic block diagram showing the structural elements in a prior art computer system being equipped with a host adapter.
- Fig. 2: is a schematic block diagram showing the basic structure of an inventional method for caching queue pairs in a first operating state, and
- Fig. 3: is a schematic block diagram according to fig. 2 in a second operating state different to that one shown in fig. 2, and
- Fig. 4A,B: is a schematic diagram showing the basic steps of the associated control flow according to the inventional embodiment shown in figs. 2 and 3.

### 4. DESCRIPTION OF THE PREFERRED EMBODIMENT

The embodiment described next is directed to a design for a transport layer logic of an I/O adapter, i.e., a so-called Host Channel Adapter (HCA) as defined by the InfiniBand Architecture.

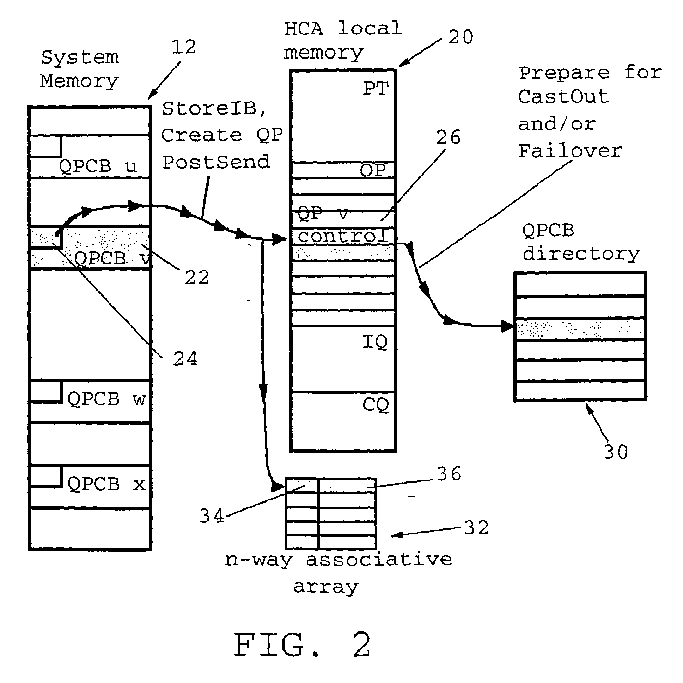

In Fig. 2 the system memory 12 - depicted left - has a plurality of entries 22 for storing the work request related control information for a particular work queue in a queue pair control block 22, further abbreviated as QPCB, each entry comprising a storage field 24 for storing the control information for it. Other queues are managed in here as well, these are, however not depicted in order to improve clarity.

Amongst others, the QPCB 22 comprises the following basic data:
- queue pair state information
- sequence numbers
- maximum transfer unit size
- destination LID (Local Identifier of connected queue pair)
- destination GID (Global Identifier of connected queue pair)
- error counters
- performance counters

Amongst others the control field 24 comprises the following basic data:
- send and receive queue head and tail pointers
- number of associated completion queues
- depth of send and receive queues

In the host adapter memory 20 several transmission control blocks, e.g., a protection table PT, the work request queue WQ, with the queue pairs QP, an interrupt queue IQ, and a complete queue CQ, are managed. For each queue a plurality of cache entries 26 is provided for receiving the queue pair ID, i.e., a unique number and the respective control information required for the connecting host adapter to do its job, i.e., route the requested data to the correct network element or I/O device, respectively.

Further, a n-way associative array 32 is provided for storing the queue pair number 34 with the local address 36 in the cache storage 20, like it corresponds to usual caching techniques. Further, a QPCB directory 30 is provided for storing the queue pair number with the address of the system memory 12, in order to enable for casting out an entry from the cache memory 20 back into the system memory 12, when required.

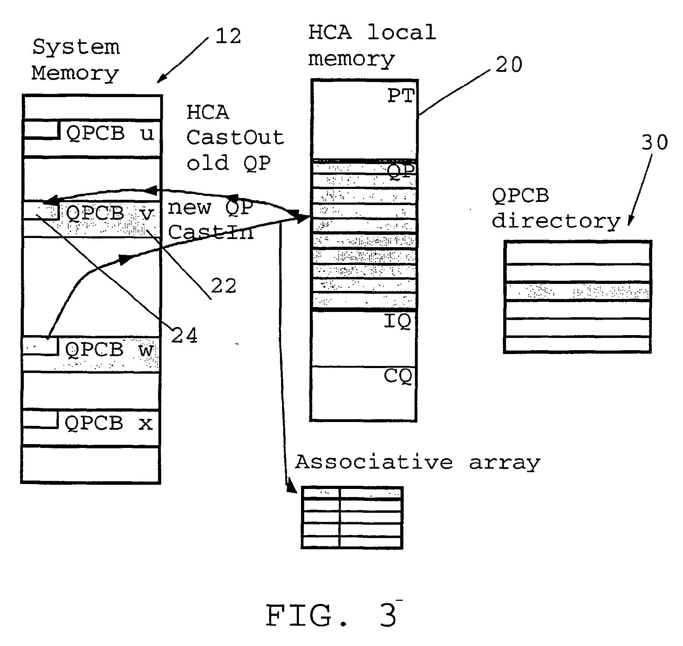

In Fig. 2 enough local memory space is available in the QP area. During operation of the caching mechanism a situation emerges in which there is no free entry in said storage area for the queue pairs. This is depicted in fig. 3 which has basically the same structure as described above with reference to fig. 2.

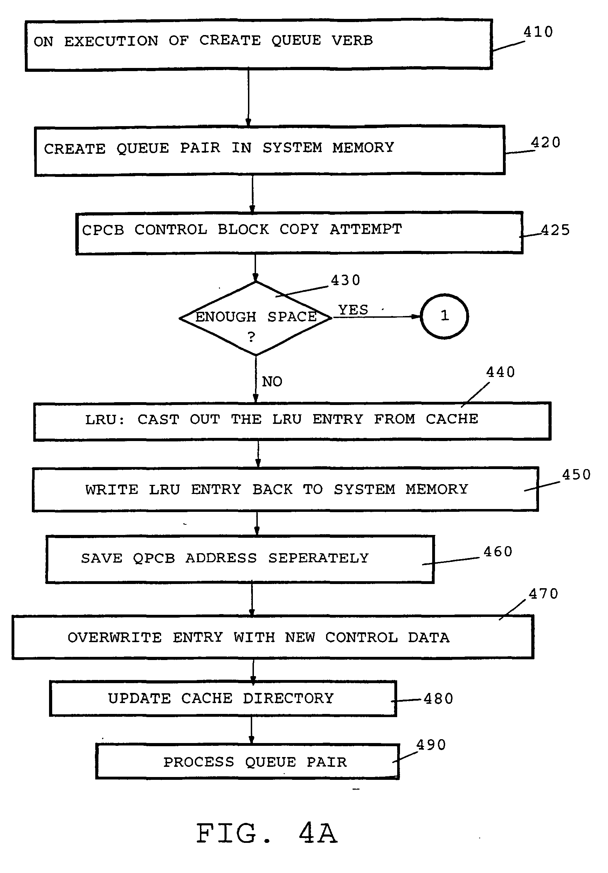

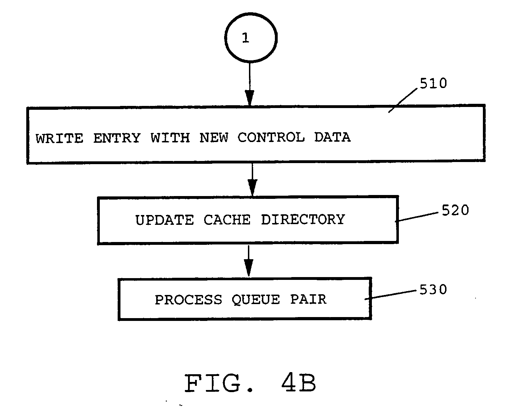

With general reference to the figures and with special reference now to fig. 4A and B, the operation of the proposed caching technique will be described in more detail with a sample queue pair as it is defined in the InfiniBand Architecture: a send queue and a receive queue. It should be noted that any other queues required for compatibility with the InfiniBand Architecture, for example, or with other protocols can be managed according to the same principle.

On execution of a CreateQueue verb, e.g., when a queue pair shall be created, step 410, this is initiated by the CPU-memory-subsystem 8 in fig. 1. The respective application which originates the queue pair generation thus triggers that a queue pair control block (QPCB) is built in the system memory 12, step 420.

Then the host adapter's cache memory gets a request for storing caching data for the queue pair, i.e., the host adapter 18 gets a door bell signal indicating that the control area 24 of the new control block has to be copied, step 425 to the host adapter. A control logic decides, step 430, if enough free storage space is available in the cache memory. If not, see the NO-branch 430 of fig. 4A, then a classical cast-out / cast-in process takes place:
In this situation now the host adapter checks the available storage space and detects that the local cache memory 20 is out of free space. Thus, in a next step 440 one particular queue pair, i.e., only its control information, is cast-out from the local cache memory according to an algorithm, like for example used in conventional caching techniques where for example the least recently used cache entry is overwritten (LRU algorithm). Thus, this entry is written back into system memory, step 450, and the address of the QPCB 22 is saved in the QPCB directory 30, step 460.

Then, in a next step 470 the host adapter 18 writes the new queue pair control block into the respective storage location, for example by simply overwriting the former contents of it.

Finally, the cache directory 32 is updated again, step 480. Then, the host adapter 18 is enabled to process the new queue pair, step 490.

When enough space is available in the local cache memory, see the YES-branch of decision 430, then the sequence of steps for cast-in/cast-out is not required. Instead, see fig. 4B now, the respective control information is copied from the system memory 12 to the local memory 20 of the host adapter 18, step 510. Thus, only a small fraction of the queue pair data amount, i.e. only the control information is stored in the local cache memory 20.

Further, said cache directory 32 is updated, as it would be done with usual caching techniques known in prior art within a processor unit, step 520. Then the request is ready for execution, the queue pairs can be processed, step 530.

Thus, the invention represents a large step forward to a significantly increased performance in host adapter's work request handling because all transmission control information - which requires only small chip area compared to the total work request data contained in the queue pair - is available immediately where it is required: local to the host adapter. The rest of data which can be sent 'through' the host adapter is stored external to the adapter/switching element because it does not carry any routing/switching information. Thus, a person skilled in the art will appreciate that the inventional concept can be scaled up and down easily with a small increase or decrease of required chip area needed for the local cache memory 20 - according to the actual requirements present on a given hardware and traffic situation.

For example, the way in which the cache memory 20 is operated, can be varied to the different types known in the art, e.g., write back, or write through, etc..

## Claims

1. A method for operating a network coupling means (18) attaching one or more computing means (10) via an associated interconnected memory means (12) to an I/O periphery (16), to a network, or to other computing means, wherein a program application posts a work request to said memory means (12), said work request comprising transmission control information and rest data,
**characterized by** the steps of:
a) operating a memory means (20) local to the network coupling means as a cache memory relative to said system memory means (12) for storing said transmission control information of said work request,
b) storing said rest data other than said control information only external from said cache-operated local memory means (20).

2. The method according to claim 1 used with the InfiniBand Architecture.

3. The method according to the preceding claim in which said transmission control comprises the processing of queues or queue pairs.

4. The method according to claim 2 in which said transmission control comprises the processing of completion queues.

5. The method according to claim 2 in which said transmission control comprises the processing of address translation and protection tables.

6. The method according to claim 2 used for connecting at least one computer means to a network.

7. The method according to claim 2 in which said transmission control information is bundled per queue or queue pair.

8. The method according to claim 2 in which said cache memory (20) is configured not to discard transmission control information for particular queues after casting-out.

9. The method according to claim 2 further comprising the step of writing said transmission control information to the memory means only before signalling the completion of a InfiniBand verb.

10. The method according to claim 2 used for connecting a plurality of I/O hardware devices (16) associated with a computing means (10).

11. The method according to claim 2 used for providing communication channels for interprocess communication between a plurality of processes associated with one or more computing means (10).

12. Use of the method according to one of the preceding claims for operating
a switch device (18) connecting to Input/Output devices (16) of a personal computer, a network switching device, in particular, a hub, or a router.

13. Use of the method according to one of the preceding claims 1- 11 for operating
a switch device (18) connecting to Input/Output devices (16) of at least one server computers, a network switching device, in particular, a hub, or a router.

14. A network coupling device (18) coupling one or more computing means (10) via an associated interconnected memory means (12) to an I/O periphery, to a network, or to other computing means, said network coupling means being responsive to a program application posting a work request to said memory means (12), said work request comprising transmission control information and rest data, **characterized by**:
a) a memory means (20) local to the network coupling means being operable as a cache memory relative to said interconnected system memory means (12) for storing said transmission control information of said work request,
b) without a means for storing said rest data other than said control information.

15. The network coupling device (18) according to the preceding claim being a Host Channel Adapter means or a Target Channel Adapter means being operable according the InfiniBand Architecture.

16. A server computer system having means (8,10,12,14) for cooperation with a network coupling device (18) with a cache memory (20) according to the preceding claims 14 or 15.

17. A printed circuit board comprising a network coupling means (18) with a cache memory (20) according to the preceding claims 14 or 15.

## Patentansprüche

1. Verfahren zum Betreiben eines Netzwerk-Verbindungsmittels (18), das ein oder mehrere Rechenmittel (10) über ein zugehöriges, verschaltetes Speichermittel (12) an eine E/A-Peripherie (16), an ein Netzwerk oder an andere Rechenmittel anschließt, wobei eine Programmanwendung eine Arbeitsanforderung an das Speichermittel (12) übergibt, wobei die Arbeitsanforderung Übertragungssteuerungsinformationen und Restdaten umfasst,
**gekennzeichnet durch** die folgenden Schritte:
a) Betreiben eines Speichermittels (20), das sich lokal in dem Netzwerk-Verbindungsmittel befindet, als Cachespeicher in Bezug auf das System-Speichermittel (12), um die Übertragungssteuerungsinformationen der Arbeitsanforderung zu speichern,
b) Speichern der Restdaten, bei denen es sich nicht um die Steuerungsinformationen handelt, ausschließlich außerhalb des von dem Cachespeicher betriebenen lokalen Speichermittels (20).

2. Verfahren nach Anspruch 1, das mit der InfiniBand-Architektur verwendet wird.

3. Verfahren nach dem vorhergehenden Anspruch, bei dem die Übertragungssteuerung die Verarbeitung von Warteschlangen oder Warteschlangen-Paaren umfasst.

4. Verfahren nach Anspruch 2, bei dem die Übertragungssteuerung die Verarbeitung von Abschlusswarteschlangen umfasst.

5. Verfahren nach Anspruch 2, bei dem die Übertragungssteuerung die Verarbeitung von Adressenumsetzungs- und Adressenschutztabellen umfasst.

6. Verfahren nach Anspruch 2, das zum Verbinden von mindestens einem Rechnermittel mit einem Netzwerk verwendet wird.

7. Verfahren nach Anspruch 2, bei dem die Übertragungssteuerungsinformationen je Warteschlange oder je Warteschlangen-Paar gebündelt werden.

8. Verfahren nach Anspruch 2, bei dem der Cachespeicher (20) so konfiguriert wird, dass er Übertragungssteuerungsinformationen für bestimmte Warteschlangen nicht verwirft, nachdem diese zurück in den Hauptspeicher kopiert worden sind ("casting-out").

9. Verfahren nach Anspruch 2, das des Weiteren den Schritt des Schreibens der Übertragungssteuerungsinformationen in das Speichermittel umfasst, wobei das Schreiben nur bis zur Signalisierung der Fertigstellung eines InfiniBand-Verbs erfolgen darf.

10. Verfahren nach Anspruch 2, das zum Verbinden einer Vielzahl von E/A-Hardware-Einheiten (16), die einem Rechenmittel (10) zugehörig sind, verwendet wird.

11. Verfahren nach Anspruch 2, das zum Bereitstellen von Übertragungskanälen für einen Zwischenprozess-Datenaustausch zwischen einer Vielzahl von Prozessen verwendet wird, die einem oder mehreren Rechenmitteln (10) zugehörig sind.

12. Verwendung des Verfahrens nach einem der vorhergehenden Ansprüche, um eine Schaltereinheit (18), die eine Verbindung zu Eingabe-/Ausgabe-Einheiten (16) eines Personal Computers, einer Netzwerk-Vermittlungseinheit, insbesondere einer Verteilereinrichtung (hub), oder einem Router herstellt, zu betreiben.

13. Verwendung des Verfahrens nach einem der vorhergehenden Ansprüche 1 bis 11, um
eine Schaltereinheit (18), die eine Verbindung zu Eingabe-/Ausgabe-Einheiten (16) von mindestens einem Server-Rechner, einer Netzwerk-Vermittlungseinheit, insbesondere einer Verteilereinrichtung, oder einem Router herstellt, zu betreiben.

14. Netzwerk-Verbindungseinheit (18), die ein oder mehrere Rechenmittel (10) über ein zugehöriges, verschaltetes Speichermittel (12) an eine E/A-Peripherie, an ein Netzwerk oder an andere Rechenmittel anschließt, wobei das Netzwerk-Verbindungsmittel auf eine Programmanwendung anspricht, die eine Arbeitsanforderung an das Speichermittel (12) übergibt, wobei die Arbeitsanforderung Übertragungssteuerungsinformationen und Restdaten umfasst, **dadurch gekennzeichnet, dass**:
a) ein sich lokal in dem Netzwerk-Verbindungsmittel befindliches Speichermittel (20) als Cachespeicher in Bezug auf das verbundene System-Speichermittel (12) betrieben werden kann, um die Übertragungssteuerungsinformationen der Arbeitsanforderung zu speichern,
b) dies ohne ein Mittel zum Speichern der Restdaten, bei denen es sich nicht um die Steuerinformationen handelt, erfolgen kann.

15. Netzwerkverbindungseinheit (18) nach dem vorhergehenden Anspruch, bei der es sich um ein Host-Kanal-Adapter-Mittel oder ein Zielkanal-Adapter-Mittel handelt, welches gemäß der InfiniBand-Architektur betrieben werden kann.

16. Server-Rechnersystem, das über Mittel (8, 10, 12, 14) zur Zusammenarbeit mit einer Netzwerkverbindungseinheit (18) mit einem Cachespeicher (20) nach den vorhergehenden Ansprüchen 14 oder 15 verfügt.

17. Leiterplatte, die ein Netzwerkverbindungsmittel (18) mit einem Cachespeicher (20) nach den vorhergehenden Ansprüchen 14 oder 15 umfasst.

## Revendications

1. Procédé d'exploitation de moyens de couplage de réseaux (18), attachant un ou plusieurs moyens informatiques (10), via des moyens de mémoire (12) interconnectés associés, à un périphérique E/S (16), à un réseau, ou à d'autres moyens informatiques, dans lequel une application de programme envoie un descripteur (Work Request) auxdits moyens de mémoire (12), ledit descripteur Work Request comprenant une information de commande de transmission et des données restantes,
**caractérisé par** les étapes consistant à :
a) exploiter des moyens de mémoire (20) localement par rapport aux moyens de couplage de réseaux, sous forme d'antémémoire relative auxdits moyens de mémoire système (12), pour stocker ladite information de commande de transmission dudit descripteur Work Request,
b) stocker lesdites données restantes, autres que ladite information de commande, uniquement de manière externe vis-à-vis desdits moyens de mémoire (20) locaux exploités en antémémoire.

2. Procédé selon la revendication 1, utilisé avec l'InfiniBand Architecture.

3. Procédé selon la revendication précédente, dans lequel ladite commande de transmission comprend le traitement de queues ou de queues d'envoi et de réception (Queue Pairs).

4. Procédé selon la revendication 2, dans lequel ladite commande de transmission comprend le traitement de queues de complétion.

5. Procédé selon la revendication 2, dans lequel ladite commande de transmission comprend le traitement de tables de traduction et de protection d'adresses.

6. Procédé selon la revendication 2, utilisé pour connexion, à au moins un moyen informatique, à un réseau.

7. Procédé selon la revendication 2, dans lequel ladite information de commande de transmission est groupée par queue ou paire de queues.

8. Procédé selon la revendication 2, dans lequel ladite antémémoire (20) est configurée pour ne pas éliminer d'information de commande de transmission pour des queues particulières, après le dégorgement par expulsion de la plus ancienne version.

9. Procédé selon la revendication 2, comprenant en outre l'étape d'écriture de ladite information de commande de transmission dans les moyens de mémoire, uniquement avant de signaler l'achèvement d'une commande élémentaire InfiniBand verb.

10. Procédé selon la revendication 2, utilisé pour connecter une pluralité de dispositifs matériels E/S (16) associés à des moyens informatiques (10).

11. Procédé selon la revendication 2, utilisé pour fournir des canaux de communication pour une communication interprocessus, entre une pluralité de processus associés à un ou plusieurs moyens informatiques (10).

12. Utilisation du procédé selon l'une des revendications précédentes, pour faire fonctionner :
un dispositif commutateur (18), connectant à des dispositifs Entrée/Sortie (16) d'un ordinateur personnel, un dispositif de commutation de réseaux, en particulier un concentrateur ou un routeur.

13. Utilisation du procédé selon l'une des revendications 1 à 11 précédentes, pour faire fonctionner
un dispositif commutateur (18), connectant à des dispositifs Entrée/Sortie (16) d'au moins un ordinateur serveur, un dispositif de commutation de réseaux, en particulier un concentrateur ou un routeur.

14. Dispositif de couplage de réseaux (18), couplant un ou plusieurs moyens informatiques (10), via des moyens de mémoire (12) interconnectés associés, à un périphérique E/S, à un réseau, ou à d'autres moyens informatiques, lesdits moyens de couplage de réseau réagissant à une application de programme, envoyant un descripteur (work request) auxdits moyens de mémoire (12), ledit descripteur comprenant une information de commande de transmission et des données restantes, **caractérisé par** :
a) des moyens de mémoire (20), susceptibles d'être exploités localement par rapport aux moyens de couplage de réseaux, sous forme d'antémémoire relative auxdits moyens de mémoire système (12) interconnectés, pour stocker ladite information de commande de transmission dudit descripteur Work Request,
b) aucun moyen, pour stocker lesdites données restantes, autres que ladite information de commande, n'est prévu.

15. Dispositif de couplage de réseaux (18) selon la revendication précédente, étant constitué de moyens Host Channel Adapter ou de moyens Target Channel Adapter, susceptibles de fonctionner selon l'InfiniBand Architecture.

16. Système informatique serveur, comprenant des moyens (8, 10, 12, 14), pour coopérer avec un dispositif de couplage de réseaux (18) muni d'une antémémoire (20) selon la revendication 14 ou 15 précédente.

17. Carte à circuit imprimé, comprenant des moyens de couplage de réseaux (18), munis d'une antémémoire (20) selon la revendication 14 ou 15 précédente.
